# EUROPEAN PATENT APPLICATION

(11) **EP 2 067 803 A1**
(43) Date of publication of application: **10.06.2009**
(21) Application number: 07828505.3
(22) Date of filing: 27.09.2007
(51) Int. Cl.: C08G 18/12, B32B 27/40, C08G 18/38, C08G 18/61, C09D 5/02, C09D 175/04

(54) **URETHANE EMULSION**

(30) Priority: 28.09.2006 JP 2006264884
(71) Applicant: The Yokohama Rubber Co., Ltd., Minato-ku Tokyo 105-8685 (JP)
(72) Inventor: TAKAHARA, Hideyuki, Kanagawa 2548601 (JP); OKAMATSU, Takahiro, Kanagawa 2548601 (JP)
(74) Representative: Vossius & Partner
(86) International application number: PCT/JP2007/068759
(87) International publication number: WO 2008/047543

(57) **Abstract**

Disclosed is a urethane emulsion which enables to obtain a cured product having excellent water repellency. This urethane emulsion is obtained by stirring a urethane prepolymer composition containing a urethane prepolymer having a carboxy group, a neutralizing agent and water. This urethane emulsion is **characterized in that** the urethane prepolymer is obtained by reacting, at a specific ratio, a polyisocyanate compound having two or more isocyanate groups, a siloxane-containing polyol compound having two or more hydroxy groups and dimethyl siloxane and/or a fluorine-containing polyol having two or more hydroxy groups and fluoroethylene, and a carboxy group-containing compound having two or more hydroxy groups and a carboxy group.

## Description

### Technical Field

The present invention relates to a urethane emulsion.

### Background Art

Technology for converting production lines which use solvent-based adhesives to the use of solventless adhesives has been developed in order to improve the work environment and as a measure against volatile organic compound (VOC) emissions from finished products. A known example of such technology involves the use of aqueous polyurethane emulsions (aqueous polyurethane resins).
Patent Documents 1 and 2 disclose art which is aimed at providing aqueous polyurethane emulsions having water repellency.

Specifically, Patent Document 1 describes a copolymer obtained by copolymerizing a fluoroalkylated allyl urethane of the general formula RfROCONHR'NHCOOCₙH₂ₙOCH₂CH=CH₂ (where Rf is a perfluoroalkyl group, R is a divalent organic group, R' is a diisocyanate residue, and the letter n is an integer from 2 to 6) with a methacrylic acid ester, an acrylic acid ester or vinylidene chloride.
Patent Document 2 describes a stainblocking polymer having (i) reactive groups selected from among carboxyl groups and salts thereof, hydroxyl groups, epoxy groups, phosphoric acid groups, alkoxysilane groups, imine groups, sulfonic acid groups, amino groups, isocyanate groups and blocked isocyanate groups; and (ii) fluoroalkyl groups.

Patent Document 1: JP 10-183476 A
Patent Document 2: JP 10-316719 A

### Disclosure of the Invention

### Problems to be Solved by the Invention

However, the inventors have discovered that films obtained from emulsions of the polymers described in Patent Document 1 and Patent Document 2 have a poor water repellency.
That is, the inventors have discovered that, on films obtained from prior-art polymer emulsions, the sliding angle required for a drop of water on the film to slide is large.

It is therefore an object of the present invention to provide a urethane emulsion which forms a cured product having an excellent water repellency.

### Means for Solving the Problems

The inventors have conducted extensive investigations in order to resolve the above problems. As a result, they have discovered that a urethane emulsion obtained by agitating a urethane prepolymer composition which includes a specific urethane prepolymer having carboxy groups, water, and a neutralizing agent forms a cured product of excellent water repellency. This discovery led to the present invention.

Specifically, the invention provides the following (1) to (7).
(1) A urethane emulsion obtained by agitating a urethane prepolymer composition comprising a carboxy group-containing urethane prepolymer, a neutralizing agent and water,
   wherein the urethane prepolymer is obtained by reacting:
   a polyisocyanate compound having at least two isocyanate groups,
   a siloxane-containing polyol compound having at least two hydroxy groups and containing dimethylsiloxane and/or a fluorinated polyol having at least two hydroxy groups and containing fluoroethylene, and
   a carboxy group-containing compound having at least two hydroxy groups and one or more carboxy groups, at a molar ratio of the isocyanate groups to the carboxy groups of between 15 and 200, a molar ratio of the isocyanate groups to the combined amount of the dimethylsiloxane and the fluoroethylene of between 4.65 and 25, and a molar ratio of the dimethylsiloxane to the fluoroethylene of between 0.79 and 9.5.
(2) The urethane emulsion of (1) above, wherein the fluorinated polyol has two or three hydroxy groups.
(3) The urethane emulsion of (1) or (2) above, wherein the agitation is carried out at a shear rate of between 5,000 and 19,000 s⁻¹.
(4) The urethane emulsion of any one of (1) to (3) above, wherein the agitation is carried out using a thin-film spin type agitator.
(5) A laminated body comprising a layer of the urethane emulsion of any one of (1) to (4) above and a substrate.
(6) The laminated body of (5) above, wherein the substrate is made of glass, metal, plastic, mortar or concrete.
(7) The laminated body of (5) or (6) above which has a water sliding angle of 40 degrees or less.

### Advantages of the Invention

The urethane emulsion of the invention forms a cured product of excellent water repellency.

### Brief Description of the Drawings

[FIG. 1] FIG. 1 is a perspective view which schematically shows an embodiment of the laminated body of the invention.
[FIG. 2] FIG. 2 is a perspective view which schematically shows an example of a laminated body used in a test to measure the sliding angle.
[FIG. 3] FIG. 3 is a front view which schematically shows a laminated body which is inclined.

### Description of Symbols

10, 20: Laminated body
12: Urethane emulsion layer
14: Substrate
22: Film
24: Glass
26: Edge
28: Edge
θ: Angle
32: Water drop
30, 34: Arrows
36: Horizontal surface

### Best Mode for Carrying Out the Invention

The invention is described more fully below.
First, the urethane emulsion of the invention is described.
The urethane emulsion of the invention is an emulsion obtained by agitating a urethane prepolymer composition made up of a carboxy group-containing urethane prepolymer, a neutralizing agent and water. The urethane prepolymer is obtained by reacting:
a polyisocyanate compound having at least two isocyanate groups,
a siloxane-containing polyol compound having at least two hydroxy groups and containing dimethylsiloxane and/or a fluorinated polyol having at least two hydroxy groups and containing fluoroethylene, and
a carboxy group-containing compound having at least two hydroxy groups and one or more carboxy groups, at a molar ratio of the isocyanate groups to the carboxy groups of between 15 and 200, a molar ratio of the isocyanate groups to the combined amount of the dimethylsiloxane and the fluoroethylene of between 4.65 and 25, and a molar ratio of the dimethylsiloxane to the fluoroethylene of between 0.79 and 9.5.

The urethane prepolymer is described below.
The urethane prepolymer used when preparing the urethane emulsion of the invention is not subject to any particular limitation, provided it has one or more carboxy groups and is obtained by reacting:
a polyisocyanate compound having at least two isocyanate groups,
a siloxane-containing polyol compound having at least two hydroxy groups and containing dimethylsiloxane and/or a fluorinated polyol having at least two hydroxy groups and containing fluoroethylene, and
a carboxy group-containing compound having at least two hydroxy groups and one or more carboxy groups, at a molar ratio of the isocyanate groups to the carboxy groups of between 15 and 200, a molar ratio of the isocyanate groups to the combined amount of the dimethylsiloxane and the fluoroethylene of between 4.65 and 25, and a molar ratio of the dimethylsiloxane to the fluoroethylene of between 0.79 and 9.5.
The carboxy group-containing urethane prepolymer is also referred to below as "carboxylated urethane prepolymer."

The method for preparing the carboxylated urethane prepolymer involves reacting:
a polyisocyanate compound having at least two isocyanate groups,
a siloxane-containing polyol compound having at least two hydroxy groups and containing dimethylsiloxane and/or a fluorinated polyol having at least two hydroxy groups and containing fluoroethylene, and
a carboxy group-containing compound having at least two hydroxy groups and one or more carboxy groups, at a molar ratio of the isocyanate groups to the carboxy groups of between 15 and 200, a molar ratio of the isocyanate groups to the combined amount of the dimethylsiloxane and the fluoroethylene of between 4.65 and 25, and a molar ratio of the dimethylsiloxane to the fluoroethylene of between 0.79 and 9.5.

The polyisocyanate compound is described below.
The polyisocyanate compound used when preparing the carboxylated urethane prepolymer is not subject to any particular limitation, provided it has at least two isocyanate groups. Any such compound employed to prepare conventional polyurethane resins may be used. Illustrative examples include tolylene diisocyanates (TDI) such as 2,4-tolylene diisocyanate and 2,6-tolylene diisocyanate; diphenylmethane diisocyanates (MDI) such as diphenylmethane-4,4'-diisocyanate; tetramethylxylylene diisocyanate (TMXDI), trimethylhexamethylene diisocyanate (TMHMDI), 1,5-naphthalene diisocyanate, ethylene diisocyanate, propylene diisocyanate, tetramethylene diisocyanate, hexamethylene diisocyanate (HDI), isophorone diisocyanate (IPDI), xylylene diisocyanate (XDI), triphenylmethane triisocyanate, diisocyanates having a norbornane skeleton (NBDI), and modified products of any of the above, such as isocyanurates.
Of the above, isophorone diisocyanate is preferred because it does not readily react with water and emulsification is easy.
The polyisocyanate compound may be used singly or as a combination of two or more thereof.

The siloxane-containing polyol compound is described below.
The siloxane-containing polyol compound used when preparing the carboxylated urethane prepolymer is not subject to any particular limitation, provided it has two or more hydroxy groups and contains dimethylsiloxane (-Si(-CH₃)₂-O-)

The number of hydroxy groups on one molecule of the siloxane-containing polyol compound is two or more, preferably two or three, and more preferably two.
The number of dimethylsiloxane moieties on one molecule of the siloxane-containing polyol compound is preferably between 10 and 132, and more preferably between 63 and 132.

The structure of the siloxane-containing polyol compound, aside from having at least two hydroxy groups and containing dimethylsiloxane, is not subject to any particular limitation. The structure, apart from having at least two hydroxy groups and containing dimethylsiloxane, is exemplified by a hydrocarbon group bearing at least one type of atom selected from the group consisting of oxygen, nitrogen, silicon and sulfur atoms. The hydrocarbon group may be branched.

Examples of the siloxane-containing polyol compound include compounds of the following formula (1).

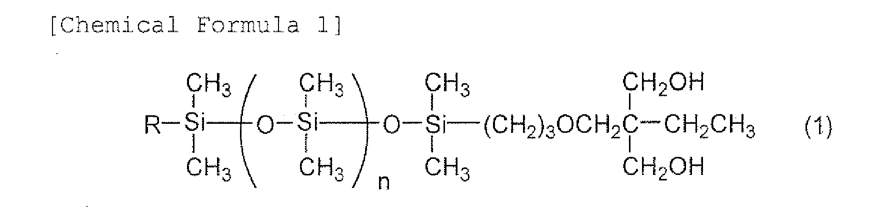

In the formula, R represents a hydrocarbon group, and the letter n is an integer from 9 to 131.
To stably obtain the urethane emulsion and to achieve a higher water-repelling effect, the number-average molecular weight of the siloxane-containing polyol compound is preferably between 1,000 and 15,000, and more preferably between 5,000 and 10,000.
Examples of the hydrocarbon group include methyl and ethyl.

A commercial product may be used as the siloxane-containing polyol compound. Examples of commercial siloxane-containing polyol compounds include Silaplane FM-DA11, Silaplane FM-DA21 and Silaplane FM-DA26 (all available from Chisso Corporation).
The siloxane-containing polyol compound may be used singly or as a combination of two or more thereof.

The fluorinated polyol compound is described below.
The fluorinated polyol compound used when preparing the carboxylated urethane prepolymer is not subject to any particular limitation, provided it has at least two hydroxy groups and contains fluoroethylene.
In the present invention, the two carbon atoms in fluoroethylene make up the backbone of the fluorinated polyol compound.
Fluoroethylenes include -CFH-CH₂-, -CF₂-CH₂-, -CF₂-CFH- and -CF₂-CF₂-.
The fluoroethylene within one molecule of the fluorinated polyol compound is of at least one type selected from the group consisting of -CFH-CH₂-, -CF₂-CH₂-, -CF₂-CFH- and -CF₂-CF₂-.
The number of hydroxy groups on one molecule of the fluorinated polyol compound is at least two. To discourage gelling of the product when the carboxylated urethane prepolymer is prepared, the number of hydroxyl groups is preferably from two to four, and more preferably two or three.
The number of fluoroethylene moieties on one molecule of the fluorinated polyol compound is preferably between 230 and 270, and more preferably 270.

The structure of the fluorinated polyol compound, aside from having at least two hydroxy groups and containing fluoroethylene, is not subject to any particular limitation. The structure, apart from having at least two hydroxy groups and containing fluoroethylene, is exemplified by a hydrocarbon group containing at least one selected from among urethane bonds, ether bonds, ester bonds, carboxy groups, chlorine atoms, bromine atoms and fluorine atoms.

Examples of the fluorinated polyol compound include compounds of formula (2) below.

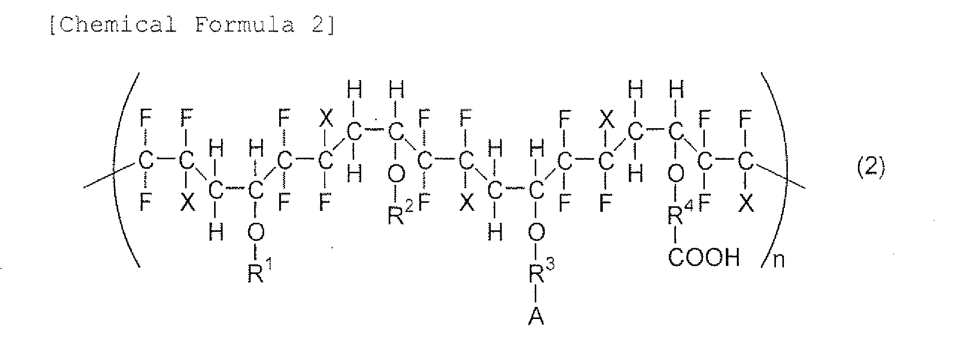

In the formula, A is a hydroxy group or R⁵-NH-COO-, R⁵ being a hydrocarbon group; X is a fluorine atom or a chlorine atom; R¹ and R² are each independently alkyl groups; R³ and R⁴ are each independently alkylene groups; and the letter n is an integer from 40 to 52.
The alkyl groups serving as R¹ and R², the alkylene groups serving as R³ and R⁴, and the hydrocarbon group serving as R⁵ are not subject to any particular limitations.

To stably obtain the urethane emulsion and to obtain a higher water-repelling effect, the number-average molecular weight of the fluorinated polyol compound is preferably between 25,000 and 32,000, and more preferably between 28,000 and 30,000.

No particular limitation is imposed on preparation of the fluorinated polyol compound.
In cases where the fluorinated polyol compound has two hydroxy groups, preparation may be carried out by, for example, a method in which a fluorinated polyol compound having three or more hydroxy groups and a monoisocyanate compound are reacted as the starting materials at 80°C for 12 hours.
The fluorinated polyol compound having three or more hydroxy groups which is used when preparing the fluorinated polyol compound is not subject to any particular limitation.
Commercial fluorinated polyol compounds having three or more hydroxy groups include Lumiflon (available from Asahi Glass Co., Ltd.).
The monoisocyanate compound used when preparing the fluorinated polyol compound is not subject to any particular limitation, provided it has one isocyanate group. For example, it may be obtained by using, in equimolar amounts, at least one diisocyanate selected from the group consisting of tolylene diisocyanate (TDI) and isophorone diisocyanate (IPDI) with at least one alcohol selected from the group consisting of isopropyl alcohol (IPA), 2-ethylhexanol (2-EH) and butyl alcohol (BA), and reacting these at a temperature close to 80°C for about 12 hours.
In one preferred embodiment, the alcohol used when preparing the monoisocyanate compound has a boiling point of at least 80°C.
The fluorinated polyol compound may be used singly or as a combination of two or more thereof.

The carboxy group-containing compound is described.
The carboxy group-containing compound used when preparing the carboxylated urethane prepolymer is a compound having at least two hydroxy groups and one or more carboxy groups.
To ensure the stability of the urethane emulsion and enhance the water resistance of the cured product obtained therefrom, the number of carboxy groups on one molecule of the carboxy group-containing compound is preferably from 1 to 4, and more preferably 1 or 2.
To stably introduce the carboxy group-containing compound into the urethane emulsion, the number of hydroxy groups on one molecule of the carboxy group-containing compound is preferably 2 or 3, and more preferably 2.
Illustrative examples of the carboxy group-containing compound include dihydroxycarboxylic acids such as dimethylolbutanoic acid, dimethylolpropionic acid, dimethylolacetic acid, glyceric acid and tartaric acid.
Of these, dimethylolbutanoic acid is preferred because it can further improve the stability of the urethane emulsion.
The carboxy group-containing compound may be used alone or in combinations of two or more thereof.

When preparing the carboxylated urethane prepolymer, the polyisocyanate compound and the carboxy group-containing polyol are reacted at a molar ratio of the isocyanate groups to the carboxy groups (isocyanate groups/carboxy groups) of between 15 and 200.
To ensure the stability of the urethane emulsion, the molar ratio of the isocyanate groups to the carboxy groups is preferably between 20 and 80.

When preparing the carboxylated urethane prepolymer, the polyisocyanate compound, the siloxane-containing polyol and the fluorinated polyol are reacted at a molar ratio of the isocyanate groups to the combined amount of the dimethylsiloxane and the fluoroethylene (isocyanate groups)/(combined amount of dimethylsiloxane and fluoroethylene)) of between 4.65 and 25.
To achieve a higher water repellency, the molar ratio of the isocyanate groups to the combined amount of the dimethylsiloxane and the fluoroethylene is preferably between 4.65 and 9.52.

When preparing the carboxylated urethane prepolymer, the siloxane-containing polyol and the fluorinated polyol are reacted at a molar ratio of the dimethylsiloxane to the fluoroethylene (dimethylsiloxane/fluoroethylene) of between 0.79 and 9.5.
To achieve a better water repellency, the molar ratio of the dimethylsiloxane to the fluoroethylene is preferably between 1.19 and 9.50.

In a preferred embodiment, the polyisocyanate compound, the siloxane-containing polyol, the fluorinated polyol compound and the carboxy group-containing compound are used in respective amounts, relative to the combined weight of the polyisocyanate compound, the siloxane-containing polyol, the fluorinated polyol compound and the carboxy group-containing compound, of between 1 and 50 wt % of the polyisocyanate compound, between 0 and 98.9 wt % of the siloxane-containing polyol compound, between 0 and 98.9 wt % of the fluorinated polyol compound and between 0.1 and 20 wt % of the carboxy group-containing compound.

The method of preparing the carboxylated urethane prepolymer is exemplified by simultaneously (at the same time) agitating the polyisocyanate compound, the siloxane-containing polyol compound and/or fluorinated polyol, and the carboxy group-containing compound.
During preparation of the carboxylated urethane prepolymer, the order in which the polyisocyanate, the siloxane-containing polyol compound and/or fluorinated polyol compound, and the carboxy group-containing compound are added is not subject to any particular limitation; these compounds may all be added at the same time, or any one of them may be added first. For example, preparation may be carried out in accordance with a conventional urethane prepolymer preparation process in which the polyisocyanate compound and the siloxane-containing polyol compound and/or fluorinated polyol compound are reacted to form a urethane prepolymer, following which the carboxy group-containing compound is added and further polymerization is carried out.
By agitating a mixture of the polyisocyanate compound, siloxane-containing polyol, fluorinated polyol compound and carboxy group-containing compound in an inert gas atmosphere at between 60°C and 90°C for a period of between about 2 hours and about 8 hours, a carboxylated urethane prepolymer can be obtained.

Preparation of the carboxylated urethane prepolymer may be carried out, if necessary, in the presence of a urethane formation catalyst such as an organotin compound, an organobismuth compound or an amine. According to one preferred embodiment, such preparation is carried out in the presence of an organotin compound.
Illustrative examples of organotin compounds include stannous carboxylates such as stannous acetate, stannous octanoate, stannous laurate and stannous oleate; dialkyltin salts of carboxylic acids, such as dibutyltin acetate, dibutyltin dilaurate, dibutyltin maleate, dibutyltin di-2-ethylhexoate, dilauryltin diacetate and dioctyltin diacetate; trialkyltin hydroxides such as trimethyltin hydroxide, tributyltin hydroxide and trioctyltin hydroxide; dialkyltin oxides such as dibutyltin oxide, dioctyltin oxide and dilauryltin oxide; and dialkyltin chlorides such as dibutyltin dichloride and dioctyltin dichloride.
Of these, dibutyltin dilaurate, dibutyltin acetate and dibutyltin maleate are preferred because they are relatively inexpensive and easy to handle.
The catalyst may be used singly or as a combination of two or more thereof.

The neutralizing agent is described below.
The neutralizing agent reacts with the carboxy groups on the carboxylated urethane prepolymer, converting the carboxy groups to a carboxylic acid salt, and is thus capable of rendering the carboxylated urethane prepolymer into a carboxylic acid salt-containing urethane prepolymer.
The neutralizing agent used to prepare the urethane emulsion of the invention is not subject to any particular limitation, provided it is capable of reacting with the carboxy groups. Illustrative examples include tertiary amines, ammonia, sodium hydroxide and potassium hydroxide.

Illustrative examples of tertiary amines include triethylamine, 2-(dimethylaminomethyl)phenol, 2,4,6-tris(dimethylaminomethyl)phenol and 1,8-diazabicyclo[5.4.0]-7-undecene.
Of these, triethylamine and ammonia are preferred because they readily volatilize during drying of the emulsion.
The neutralizing agent may be used singly or as a combination of two or more thereof.

In the present invention, to further stabilize the urethane emulsion, the amount of the neutralizing agent, expressed as a molar ratio with respect to the carboxy groups on the carboxylated urethane prepolymer (moles of neutralizing agent/carboxy groups on carboxylated urethane prepolymer), is preferably between 1.0 and 1.3, and more preferably between 1.0 and 1.1.
When the amount of the neutralizing agent is equimolar with the carboxy groups, the pH of the urethane emulsion is preferably between 7.0 and 8.0, and more preferably between 7.0 and 7.5.

In the present invention, the amount of water is not subject to any particular limitation, provided it is an amount capable of dispersing the carboxylated urethane prepolymer.

In addition to the carboxylated urethane prepolymer, the neutralizing agent and water, if necessary, other ingredients such as a viscosity modifier and a chain extender may also be used during preparation of the urethane emulsion of the invention.

Viscosity modifiers that may be used during preparation of the urethane emulsion of the invention include organic solvents which are compatible with water, such as ethyl acetate, acetone and methyl ethyl ketone.
Use may be made of a single viscosity modifier or a combination of two or more viscosity modifiers.

To curb thickening of the urethane prepolymer and increase dispersibility during emulsification, the amount of viscosity modifier used per 100 parts by weight of the carboxylated urethane prepolymer is preferably between 50 and 300 parts by weight, and more preferably between 50 and 150 parts by weight.

Chain extenders that may be used when preparing the urethane emulsion of the invention are not subject to any particular limitation, provided they are ones that can be used in urethane emulsions. Illustrative examples include aliphatic diamines such as ethylenediamine, propylenediamine, hexamethylenediamine and triethylenetetramine; alicyclic diamines such as isophoronediamine and piperazine; aromatic diamines such as diphenyldiamine; and triamines.

From the standpoint of increasing the molecular weight and obtaining an emulsion of polymer particles, the amount of chain extender used per 100 parts by weight of the carboxylated urethane prepolymer is preferably between 5 and 20 parts by weight, and more preferably between 5 and 10 parts by weight.

The urethane emulsion of the invention may be prepared by agitating a urethane prepolymer composition containing a carboxylated urethane prepolymer, a neutralizing agent and water, and also containing a viscosity modifier and a chain extender which may optionally be used.

In order for the resulting urethane emulsion to have a small particle size and an average particle size distribution that is narrow, for the urethane emulsion to be stable, and for most of the carboxylate ions to be made present at the surface of particles of the carboxylic acid salt-containing urethane prepolymer, the shear rate when agitating the urethane prepolymer composition is preferably between 5,000 and 19,000 s⁻¹, and more preferably between 12,000 and 15,000 s⁻¹.

The agitating apparatus used when preparing the urethane emulsion of the invention may be, for example, a thin-film spin type agitator.
The thin-film spin type agitator is an agitating apparatus that employs a thin-film spin method.
The thin-film spin method refers to a method of agitating a treatment liquid by placing the treatment liquid in a vessel and rotating an agitating element inside the treatment liquid. The agitating element, which has an end portion that reaches close to an inner peripheral surface of the vessel, is rotated at a high velocity within the treatment liquid, imparting rotational movement to the treatment liquid such that, by a centrifugal force, the treatment liquid presses up against the inside surface of the vessel and spins in the shape of a hollow cylindrical film.
According to this method, the treatment liquid receives the energy of the agitating element, causing the treatment liquid to spin at a high speed and, under a centrifugal force, to be pressed against the inner surface of the vessel so that the liquid spins in the shape of a hollow cylindrical film. However, the treatment liquid spins at a slower speed than the rotational velocity of the agitating element. As a result, the treatment liquid on the rotating surface of the agitating element incurs an agitating effect by the end portion of the agitating element, in addition to which an agitating effect associated with rotation of the flow of the treatment liquid also arises, thereby pulverizing the treatment liquid.

In order for the urethane emulsion obtained to have a small particle size and a narrow average particle size distribution, for the urethane emulsion to be stable, and for most of the carboxylate ions to be made present at the surface of particles of the carboxylic acid salt-containing urethane prepolymer, the agitating device is preferably a thin-film spin type agitator. Exemplary thin-film spin type agitators include those mentioned in JP 09-75698 A. Illustrative examples of commercial thin-film spin type agitators include T.K. FILMICS 30-25, T.K. FILMICS 56-50 and T.K. FILMICS 80-50 (all manufactured by Primix Corporation).

In the urethane emulsion of the invention, it is preferable for the urethane prepolymer composition to become, following agitation, a urethane emulsion in which particles of the carboxylic acid salt-containing urethane prepolymer are dispersed in water. The carboxylic acid salt-containing urethane prepolymer is also referred to herein as a "carboxylate-containing urethane prepolymer."

The carboxylic acid salt within the carboxylated-containing urethane prepolymer is not subject to any particular limitation, provided it dissociates in water to form carboxylate ions (-COO⁻)
The cations which form a salt with the carboxylate ions are not subject to any particular limitation, provided they are cations generated by the neutralizing agent. Illustrative examples include alkali metal ions such as sodium ions and potassium ions, and nitrogen atom-containing ions such as ammonium ions and quaternary ammonium ions.

To achieve a better composition stability and to impart the cured product obtained therefrom with a better water repellency and a good water resistance, the molar ratio of the combined amount of urethane bonds (-NH-CO-O-) and isocyanate groups with respect to the carboxylic acid salt ((combined amount of urethane bonds and isocyanate groups)/( carboxylic acid salt)) within the carboxylate-containing urethane prepolymer is preferably between 15 and 200, and more preferably between 12 and 80.
The carboxylic acid salt forms by neutralization of the carboxy groups on the carboxylated urethane prepolymer with the neutralizing agent. In the present invention, the number of moles of the carboxylic acid salt is the same as the number of moles of carboxy groups in the carboxylated urethane prepolymer. In the event that all the carboxy groups are not neutralized, the number of moles of the carboxylic acid salt shall be the value obtained by adding the number of moles of unneutralized carboxy groups to the number of moles of the carboxylic acid salt (i.e., the number of moles of carboxy groups on the carboxylated urethane prepolymer).

For the total surface area of the carboxylate-containing urethane prepolymer particles to be larger and to achieve a better water repellency and a good water resistance in the resulting cured product, the average particle size of the carboxylate-containing urethane prepolymer particles is preferably 25 µm or less, and more preferably between 0.1 and 1 µm.
In the present invention, the average particle size of the particles is measured using a Microtrac particle size analyzer (Nikkiso Co., Ltd.).

For good particle size uniformity, it is desirable that the average particle size have a standard deviation of preferably 10 µm or less, and more preferably between 0.1 and 1 µm.
To achieve a more stable urethane emulsion, it is desirable for the pH of the urethane emulsion to be preferably between 7.0 and 8.0, and more preferably between 7.0 and 7.5.

The urethane emulsion of the invention may also include, if necessary, a crosslinking agent having two or more groups of at least one type selected from among oxazoline, carbodiimide and aziridine groups, and/or an additive.

Crosslinking agents that may be included in the urethane emulsion of the invention are not subject to any particular limitation, provided they are compounds having two or more groups of at least one type selected from among oxazoline, carbodiimide and aziridine groups. For example, an aqueous resin and/or emulsion thereof having on the molecule two or more groups of at least one type selected from among oxazoline, carbodiimide and aziridine groups is preferred on account of its excellent compatibility with the urethane emulsion. Such crosslinking agents may be used singly or as combinations of two or more thereof.
Of the above, a crosslinking agent having two or more oxazoline groups is preferred for reaction with the carboxy groups at relatively low temperatures.

The aqueous resin is an aqueous resin (polymer) having on the molecule two or more groups of at least one type selected from among oxazoline, carbodiimide and aziridine groups. The aqueous resin preferably has an acrylic main chain.
The aqueous resin may be used after dissolution beforehand in a suitable solvent. Preferred examples of the solvent include water and 1-methoxy-2-propanol. The solids content at this time is preferably between 5 and 30 wt %.

The aqueous resin may be prepared by a known method, or a commercial product may be used.
Examples of commercial products include oxazoline group-containing crosslinking agents such as EPOCROS WS-500 and EPOCROS WS-700 (both available from Nippon Shokubai Co., Ltd.), and carbodiimide group-containing crosslinking agents such as Carbodilite V-02, Carbodilite V-02-L2 and Carbodilite V-04 (all available from Nisshinbo Industries, Inc.).

The emulsion is an emulsion having on the molecule two or more groups of at least one type selected from among oxazoline, carbodiimide and aziridine groups. The resin ingredient included in the emulsion preferably has an acrylic main chain.
The emulsion preferably has a solids content of between 10 and 60 wt %.

The emulsion may be prepared by a known method, or a commercial product may be used.
Examples of commercial products include oxazoline group-containing crosslinking agents such as EPOCROS K-1010E, EPOCROS K-1020E, EPOCROS K-1030E, EPOCROS K-2010E, EPOCROS K-2020E and EPOCROS K-2030E (all available from Nippon Shokubai Co., Ltd.).

Examples of other commercial products that may be used include aziridine group-containing crosslinking agents such as XAMA-2 and XAMA-7 (both available from EIT, Inc.), and PFAZ-322 (available from Sybron Chemicals. Inc.); and carbodiimide group-containing crosslinking agents such as UCARLNK Croslinker XL-29SE (available from Union Carbide), and Carbodilite E-01 and Carbodilite E-02 (both available from Nisshinbo Industries, Inc.).

The amount of crosslinking agent, expressed as the molar ratio of the carboxylic acid salt present in the carboxylate-containing urethane prepolymer to the sum of the oxazoline groups, carbodiimide groups and aziridine groups present in the crosslinking agent (carboxylic acid salt/(sum of oxazoline groups, carbodiimide groups and aziridine groups)), is preferably between 1.0/0.5 and 1.0/2.0, more preferably between 1.0/0.5 and 1.0/1.5, and even more preferably between 1.0/0.8 and 1.0/1.2. At a molar ratio within the above range, the film hardness-enhancing effect by crosslinking is large, enabling a cured product having an excellent water resistance to be obtained. In addition, the storage stability is also excellent.
The crosslinking agent may react with the carboxylate-containing urethane prepolymer present in the urethane emulsion.

Additives that may be included in the urethane emulsion of the invention are exemplified by fillers, antidegradants, antioxidants, pigments (dyes), plasticizers, thixotropic agents, ultraviolet absorbers, flame retardants, surfactants (including leveling agents), dispersants, dehydrating agents, tackifiers and antistatic agents.

The fillers are exemplified by organic and inorganic fillers in various forms. Illustrative examples include fumed silica, fired silica, precipitated silica, pulverized silica and fused silica; diatomaceous earth; iron oxide, zinc oxide, titanium oxide, barium oxide and magnesium oxide; calcium carbonate, magnesium carbonate and zinc carbonate; pyrophyllite clay, kaolin clay and fired clay; carbon black; and also fatty acid-treated, resin acid-treated, urethane compound-treated or fatty acid ester-treated products of any of the above.

The antidegradant is exemplified by hindered phenol-type compounds.
The antioxidant is exemplified by butylhydroxytoluene (BHT) and butylhydroxyanisole (BHA).

Examples of suitable pigments include inorganic pigments such as titanium oxide, zinc oxide, ultramarine, red iron oxide, lithopone, lead, cadmium, iron, cobalt, aluminum, hydrochlorides and sulfates; and organic pigments such as azo pigments, phthalocyanine pigments, quinacridone pigments, quinacridonequinone pigments, dioxazine pigments, anthrapyrimidine pigments, anthanthrone pigments, indanthrone pigments, flavanthrone pigments, perylene pigments, perinone pigments, diketopyrrolopyrrole pigments, quinonaphthalone pigments, anthraquinone pigments, thioindigo pigments, benzimidazolone pigments, isoindoline pigments and carbon black.

Examples of suitable plasticizers include diisononyl phthalate (DINP); dioctyl adipate and isodecyl succinate; diethylene glycol dibenzoate and pentaerythritol ester; butyl oleate and methyl acetylricinoleate; tricresyl phosphate and trioctyl phosphate; and poly(propylene glycol adipate) and poly(butylene glycol adipate).

Examples of suitable thixotropic agents include AEROSIL (available from Nippon Aerosil Co., Ltd.), and DISPARLON (available from Kusumoto Chemicals, Ltd.).
Examples of suitable tackifiers include terpene resins, phenolic resins, terpene-phenolic resins, rosin resins and xylene resins.

Examples of suitable flame retardants include chloroalkyl phosphates, dimethyl methylphosphonate, bromine-phosphorus compounds, ammonium polyphosphate, neopentylbromide-polyethers and brominated polyethers.
Examples of suitable antistatic agents generally include quaternary ammonium salts; and hydrophilic compounds such as polyglycols and ethylene oxide derivatives.

In cases where the urethane emulsion of the invention includes a crosslinking agent and/or an additive, the method of preparation is not subject to any particular limitation. For example, preparation may be carried out by thoroughly working together the urethane emulsion prepared as described above and the crosslinking agent and/or additive using an agitator such as a mixer. Alternatively, the crosslinking agent and/or additive may be added to the carboxylated urethane prepolymer, neutralizing agent and water during preparation of the urethane emulsion of the invention.

The urethane emulsion of the invention may be employed as either a one-part or a two-part composition.
When employed as a one-part composition, because there is no need to mix the base resin and the curing agent (crosslinking agent) on site, the composition has an excellent ease of use.
In a preferred embodiment, the urethane emulsion of the invention is used as a one-part composition on account of the excellent stability.

No particular limitation is imposed on curing of the urethane emulsion of the invention. For example, by drying the urethane emulsion at between about 50°C and about 120°C for a period of 0.3 to 2 hours, a film can be formed, enabling a cured product of excellent water repellency to be obtained.

The cured product obtained from the urethane emulsion of the invention also has an excellent oil repellency.
The urethane emulsion of the invention may be coated onto a substrate made of, for example, glass, metal, plastic, concrete or mortar.
The substrate may be coated with, for example, a primer or paint.
Applications for the inventive urethane emulsion include coatings for vehicular glass, coatings for roadway signs, coatings for electronic components, and coatings for removing graffiti.

Next, the laminated body of the present invention is described.
The inventive laminated body is composed of a layer of the urethane emulsions of the invention and a substrate.

No particular limitation is imposed on the urethane emulsion used in the inventive laminated body, provided it is a urethane emulsion according to the present invention.
The substrate used in the inventive laminated body is exemplified by, but not limited to, glass, metal, plastic, mortar and concrete.
The substrate may be coated with, for example, a primer or paint.

The inventive laminated body is described below in conjunction with the appended diagrams.

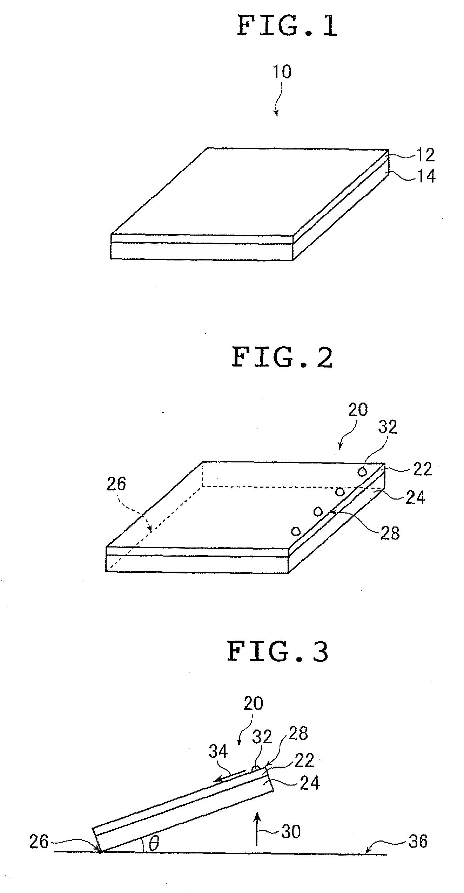

FIG. 1 is a perspective view which schematically shows an embodiment of the laminated body of the invention.
In FIG. 1, the laminated body 10 has a urethane emulsion layer 12 and a substrate 14. The laminated body of the invention is not limited by the appended diagrams.

No particular limitation is imposed on production of the inventive laminated body.
An exemplary method of production includes a coating step in which a urethane emulsion is applied onto a substrate, and a drying step in which the urethane emulsion-coated substrate is dried.

First, in the coating step, the urethane emulsion is applied onto the substrate, thereby giving a urethane emulsion-coated substrate.
The amount of urethane emulsion is not subject to any particular limitation.
No particular limitation is imposed on the method of applying the urethane emulsion.

Following the coating step, in the drying step, the urethane emulsion-coated substrate is dried, thereby giving a laminated body.
The drying temperature is preferably between 50 and 120°C, and more preferably between 80 and 120°C.
The drying time is preferably between 0.3 and 2 hours, and more preferably between 0.5 and 1 hour.

In the laminated body, the urethane emulsion layer has a thickness of preferably between 0.1 and 10 µm, and more preferably between 0.1 and 1 µm.
The laminated body has a water sliding angle of preferably 40 degrees or less, and more preferably between 10 and 15 degrees.
In the present invention, measurement of the sliding angle was carried out as follows.
First, the urethane emulsion was applied onto a square-shaped piece of glass (10 cm long by 10 cm wide) and dried for 1 hour at 20°C to render the urethane emulsion into a film, thereby forming a film-covered glass. The film-covered glass was placed horizontal, a single drop of water was deposed on the film, one of the four edges of the glass was immobilized, and the edge on the side opposite to the immobilized edge was slowly raised, thereby inclining the film-covered glass. When the water drop began moving on the film-covered glass, the angle of the glass relative to the glass when placed horizontal was measured and this angle was called the sliding angle.

The inventors have found that conventional urethane emulsions, owing to the presence of emulsifying ingredients such as carboxy groups in the urethane prepolymer serving as a starting material, form films having a poor water repellency.
That is, the object of films obtained from conventional urethane emulsions has been to resolve the water repellency from the standpoint of increasing the contact angle of a water droplet.
However, even when a substrate having a film of a prior-art urethane emulsion thereon is inclined, a water drop on the film often has difficulty rolling down and remains attached to the surface of the substrate. Moreover, the inventors found that, to have a drop of water slide off the substrate, it is necessary to considerably incline the substrate.
In contrast with this, the inventors have discovered that, by reducing the amount of carboxy groups in the carboxylated urethane prepolymer used to form the urethane emulsion, the affinity to water of the film obtained from the urethane emulsion can be lowered, enabling a smaller water sliding angle to be achieved.
Moreover, the inventors have discovered that when the carboxylated urethane prepolymer is one obtained using specific amounts of a siloxane-containing polyol compound and/or a fluorinated polyol compound, the water sliding angle is further reduced. This discovery ultimately led to the present invention.

### Examples

Examples of the invention are given below by way of illustration, and not by way of limitation.

### 1. Measurements

Using the resulting urethane emulsions, the sliding angle and stability of the urethane emulsions were determined by the methods described below. The results are shown in Table 1.

### (1) Sliding Angle

Measurement of the sliding angle is explained below in conjunction with the attached diagrams.
FIG. 2 is a perspective view which schematically shows an example of a laminated body used in a test to measure the sliding angle.
FIG. 3 is a front view which schematically shows a laminated body which is inclined.
In FIG. 2, the laminated body 20 is a square-shaped piece of glass 24 measuring 10 cm long by 10 cm wide which has thereon a film 22 of the urethane emulsion that has been prepared.
The laminated body 20 is obtained by applying the resulting urethane emulsion onto the glass 24 and drying the urethane emulsion at 20°C for 1 hour to form a film.
The laminated body 20 is placed horizontal and, as shown in FIG. 2, four water drops 32 (weight per drop: 0.04 g) are deposited at equal intervals in a row on the laminated body 20 near an edge 28 thereof.
Next, as shown in FIG. 3, with one edge 26 of the glass 24 immobilized on a horizontal surface 36, the laminated body 20 is slowly raised in the direction of arrow 30, thereby inclining the laminated body 20.
Each time one of the water drops 32 began to move in the direction of arrow 34, the angle θ between the laminated body 20 and the horizontal surface 36 was measured, and the average of the measurements for all the drops was treated as the sliding angle.

### (2) Emulsified State

The emulsified state of the resulting urethane emulsion was visually examined.
When the urethane emulsion was uniformly dispersed, the emulsified state was rated as "good"; when the urethane emulsion had separated, the emulsified state was rated as "NG".

### 2. Preparation of the Ingredients

### (1) Monoisocyanate Compound

A vessel was charged with 12.27 g of 2-ethylhexanol (Kanto Chemical Co., Inc.) and 21 g of isophorone diisocyanate (Mitsui Takeda Chemicals, Inc.), following which the reactants were heated to 80°C and reacted for 6 hours, thereby forming a monoisocyanate compound.

### (2) Fluorinated Polyol Compound

A fluorinated polyol compound having two hydroxy groups was prepared by charging a vessel with 137.93 g of a fluorinated polyol compound having 12 hydroxy groups (Lumiflon; number-average molecular weight, 30,000; Asahi Glass Co., Ltd.) and 1.07 g of the monoisocyanate compound obtained as described above, then heating to 80°C and reacting for 6 hours.
The resulting fluorinated polyol compound was used to prepare a carboxylated urethane prepolymer.

### (3) Synthesis of Carboxylated Urethane Prepolymer

A polyisocyanate compound, a siloxane-containing polyol compound, the fluorinated polyol compound prepared as described above and a carboxy group-containing compound were charged into an agitator in the amounts (moles) shown in Table 1 below and reacted under a nitrogen stream at 70°C for 8 hours, thereby synthesizing a carboxylated urethane prepolymer.
The resulting carboxylated urethane prepolymer had a molecular weight of 5,000.

### 3. Preparation of Urethane Emulsion

Next, the resulting carboxylated urethane prepolymer (in an unisolated state following synthesis) was dissolved in a viscosity modifier, then charged, together with water, a neutralizing agent and a chain extender, into a thin-film spin type agitator (manufactured by Primix Corporation under the trade name T.K. FILMICS 80-50) and dispersed by one hour of agitation at 10°C and the shear rate shown in Table 1, thereby forming a urethane emulsion.
The respective amounts of the viscosity modifier, water, neutralizing agent and chain extender, and the solids contents (wt %)--excluding the viscosity modifier and the water--of each urethane emulsion obtained are shown in Table 1 below.
In Table 1, "Isocyanate groups/Carboxy groups" denotes, in connection with the polyisocyanate compound and the carboxy group-containing compound used when synthesizing the urethane prepolymer, the molar ratio of the isocyanate groups in the polyisocyanate compound to the carboxy groups in the carboxy group-containing compound.

**[Table 1]**

| Table 1 (part 1) | | | | | | | |
|---|---|---|---|---|---|---|---|
| | Examples | | | | | | |
| | 1 | 2 | 3 | 4 | 5 | 6 | 7 |
| Polyisocyanate compound (moles) (moles of isocyanate groups) | 2 (4) | 2 (4) | 2 (4) | 2 (4) | 2 (4) | 2 (4) | 2 (4) |
| Siloxalle-containing polyol compound (moles of Si(CH₃)₂O) | 0.2 (0.19) | 0.2 (0.19) | 0.2 (0.19) | 0.2 (0.19) | 0.2 (0.19) | 0.2 (0.19) | 0.2 (0.19) |
| Fluorinated polyol compound (moles) (moles of fluoroethylene) | 0.05 (0.02) | 0.1 (0.04) | 0.2 (0.08) | 0.3 (0.12) | 0.4 (0.16) | 0.6 (0.24) | 0.2 (0.04) |
| Carboxy group-containing compound (moles) (moles of carboxy groups) | 0.2 (0.2) | 0.2 (0.2) | 0.2 (0.2) | 0.2 (0.2) | 0.2 (0.2) | 0.2 (0.2) | 0.1 (0.1) |
| Neutralizing agent (moles) (moles of alkaline functional groups) | 0.2 (0.2) | 0.2 (0.2) | 0.2 (0.2) | 0.2 (0.2) | 0.2 (0.2) | 0.2 (0.2) | 0.1 (0.1) |
| Chain extender (moles) | 0.4 | 0.4 | 0.4 | 0.4 | 0.4 | 0.4 | 0.4 |
| Viscosity modifier (g) | 45 | 45 | 45 | 45 | 45 | 45 | 45 |
| Water (g) | 80 | 80 | 80 | 80 | 80 | 80 | 80 |
| Isocyanate groups/Carboxy groups | 20 | 20 | 20 | 20 | 20 | 20 | 40 |
| Isocyanate groups/(fluoroethylene + Si(CH₃)₂O) molar ratio | 9.52 | 8.70 | 7.41 | 6.45 | 5.71 | 4.65 | 8.70 |
| Si(CH₃)₂O/(fluoroethylene) molar ratio | 9.50 | 4.75 | 2.38 | 1.58 | 1.19 | 0.79 | 4.75 |
| Solids content (wt %) | 20 | 20 | 20 | 20 | 20 | 20 | 20 |
| Shear rate (s⁻¹) | 12,000 | 12,000 | 12,000 | 12,000 | 12,000 | 12,000 | 12,000 |
| Sliding angle (degrees) | 15 | 15 | 15 | 15 | 15 | 15 | 15 |
| Emulsified state | good | good | good | good | good | good | good |

**[Table 2]**

| Table 1 (part 2) | | | | | | | |
|---|---|---|---|---|---|---|---|
| | Examples | | Comparative Examples | | | | |
| | 8 | 9 | 1 | 2 | 3 | 4 | 5 |
| Polyisocyanate compound (moles) | 2 | 2 | 2 | 2 | 2 | 2 | 2 |
| (moles of isocyanate groups) | (4) | (4) | (4) | (4) | (4) | (4) | (4) |
| Siloxane-containing polyol compound (moles of Si(CH₃)₂O) | 0.2 (0.19) | | 0.2 (0.19) | 0.2 (0.19) | 0.2 (0.19) | 0.2 (0.19) | 0.2 (0.19) |
| Fluorinated polyol compound (moles) (moles of fluoroethylene) | | 0.2 (0.08) | 0.2 (0.08) | 0.6 (0.24) | 0.6 (0.24) | 0.6 (0.24) | 0.01 (0.004) |
| Carboxy group-containing compound (moles) (moles of carboxy groups) | 0.2 (0.2) | 0.2 (0.2) | 0.3 (0.3) | 0.3 (0.3) | 0.4 (0.4) | 0.5 (0.5) | 0.1 (0.1) |
| Neutralizing agent (moles) (moles of alkaline functional groups) | 0.2 (0.2) | 0.2 (0.2) | 0.3 (0.3) | 0.3 (0.3) | 0.4 (0.4) | 0.5 (0.5) | 0.1 (0.1) |
| Chain extender (moles) | 0.4 | 0.4 | 0.4 | 0.4 | 0.4 | 0.4 | 0.4 |
| Viscosity modifier (g) | 45 | 45 | 45 | 45 | 45 | 45 | 45 |
| Water (g) | 80 | 80 | 80 | 80 | 80 | 80 | 80 |
| Isocyanate groups/Carboxy groups | 20 | 20 | 13.3 | 13.3 | 10 | 8 | 40 |
| Isocyanate groups/(fluoroethylene + Si(CH₃)₂O) molar ratio | 10.53 | 25 | 7.41 | 4.65 | 4.65 | 4.65 | 10.3 |
| Si(CH₃)₂O/(fluoroethylene) molar ratio | - | - | 2.38 | 0.79 | 0.79 | 0.79 | 47.5 |
| Solids content (wt %) | 20 | 20 | 20 | 20 | 20 | 20 | 20 |
| Shear rate (s⁻¹) | 12,000 | 12,000 | 12,000 | 12,000 | 12,000 | 12,000 | 12,000 |
| Sliding angle (degrees) | 30 | 30 | 50 | 50 | 80 | 90 | 70 |
| Emulsified state | good | good | good | good | good | good | good |

Details are given below on each of the ingredients shown in Table 1.
Polyisocyanate compound: Isophorone diisocyanate (available from Mitsui Takeda Chemicals, Inc.)
Siloxane-containing polyol compound: Silaplane FM-DA21, available from Chisso Corporation)
Fluorinated polyol compound: The fluorinated polyol prepared as described above
Carboxy group-containing compound: Dimethylolbutanoic acid (Nippon Kasei Chemical Co., Ltd.)
Neutralizing agent: Triethylamine (Kanto Chemical Co., Inc.) Chain extender: Piperazine hexahydrate (Nippon Nyukazai Co., Ltd.)
Viscosity modifier: Methyl ethyl ketone (Kanto Chemical Co., Inc.)

As is apparent from the results shown in Table 1, in Comparative Examples 1 to 4, in which the molar ratio of isocyanate groups to carboxy groups was less than 15, the sliding angle was large. In Comparative Example 5, in which the molar ratio of isocyanate groups to the combined amount of dimethylsiloxane and fluoroethylene was larger than 9.52 and the molar ratio of dimethylsiloxane to fluoroethylene was larger than 10, the sliding angle was large.
By contrast, each of the urethane emulsions in Examples 1 to 9 according to the present invention formed cured products having a small water sliding angle and an excellent water repellency. Moreover, each of the urethane emulsions of Examples 1 to 9 had a stable emulsified state.

### Industrial Applicability

The urethane emulsions of the invention form cured products having an excellent water repellency.

## Claims

1. A urethane emulsion obtained by agitating a urethane prepolymer composition comprising a carboxy group-containing urethane prepolymer, a neutralizing agent and water,
wherein the urethane prepolymer is obtained by reacting:
a polyisocyanate compound having at least two isocyanate groups,
a siloxane-containing polyol compound having at least two hydroxy groups and containing dimethylsiloxane and/or a fluorinated polyol having at least two hydroxy groups and containing fluoroethylene, and
a carboxy group-containing compound having at least two hydroxy groups and one or more carboxy groups,
at a molar ratio of the isocyanate groups to the carboxy groups of between 15 and 200, a molar ratio of the isocyanate groups to the combined amount of the dimethylsiloxane and the fluoroethylene of between 4.65 and 25, and a molar ratio of the dimethylsiloxane to the fluoroethylene of between 0.79 and 9.5.

2. The urethane emulsion of claim 1, wherein the fluorinated polyol has two or three hydroxy groups.

3. The urethane emulsion of claim 1 or 2, wherein said agitation is carried out at a shear rate of between 5,000 and 19,000 s⁻¹.

4. The urethane emulsion of any one of claims 1 to 3,
wherein said agitation is carried out using a thin-film spin type agitator.

5. A laminated body comprising a layer of the urethane emulsion of any one of claims 1 to 4 and a substrate.

6. The laminated body of claim 5, wherein the substrate is made of glass, metal, plastic, mortar or concrete.

7. The laminated body of claim 5 or 6 which has a water sliding angle of 40 degrees or less.
